# EUROPEAN PATENT APPLICATION

(11) **EP 1 918 187 A1**
(43) Date of publication of application: **07.05.2008**
(21) Application number: 07119249.6
(22) Date of filing: 25.10.2007
(51) Int. Cl.: B62K 5/00, B62K 5/04, B62K 5/08, B62K 25/24, B60G 21/05, B62D 9/02

(54) **Rolling vehicle with two front steering wheels and at least a rear driving wheel**

(30) Priority: 30.10.2006 IT MI20062084
(71) Applicant: PIAGGIO & C. S.p.A., 56025 Pontedera (Pisa) (IT)
(72) Inventor: Martini, Federico, 56025 PONTEDERA (Pisa) (IT); Santucci, Mario Donato, 55044 MARINA DI PIETRASANTA (Lucca) (IT); Rosellini, Walter, 51016 MONTECATINI TERME (Pistoia) (IT); Di Tanna, Onorino, 00185 ROME (IT); Mariotti, Valentino, 56032 BUTI (Pisa) (IT); Bartolozzi, Stefano, 56126 FIRENZE (IT)
(74) Representative: De Gregori, Antonella

(57) **Abstract**

A rolling vehicle (10) with two front steering wheels (16,18) comprising a frame (14), handlebars (20), at least a rear driving wheel (12) connected to a motor (22), and a steering kinematism of the two front wheels (16,18), wherein the steering kinematism is longitudinal and comprises two parallel longitudinal arms fixedly connected at one end of a steering control lever, connected to the handlebars through a cylindrical hinge (24), and at the other end, through two spherical hinges (32,34), to two articulated quadrilaterals, also longitudinal with respect to the vehicle (10), which rotatably connect the two front wheels (16,18) to the frame (14), so as to achieve steering, performed by a user through a rotation of the handlebars, of the two front wheels (16,18) with respect to the frame (14).

## Description

The present invention refers to a rolling vehicle, particularly but not exclusively a motorcycle, equipped with two side-by-side front steering wheels and with at least a rear drive wheel.

Over the last few years, in the field of three-wheeled vehicles numerous solutions have been made that foresee the presence of a rolling vehicle equipped with two front steering wheels, preferably connected to the frame of the vehicle through the interposition of a suspension system, and with a single rear driving wheel.

Such vehicles, equipped or not with a motor and usually without a real closed body, so as to be able to fall within the category of cycles and motorcycles, are thus able to combine the stability typical of four-wheeled vehicles with the handling that is a defining characteristic of two-wheeled motorcycles. In particular, the presence on these vehicles of an integrated rolling and steering system has the advantage of allowing the vehicle itself to tilt to the side while cornering and to support itself when it is not moving, not therefore requiring stands or other ground support elements during prolonged stops and not requiring that the rider necessarily has to put his feet on the ground during stops.

A three-wheeled rolling vehicle of the type described above is illustrated, for example, in patent application EP-1484239-A2 filed to the same Applicant, and foresees the presence of a front rolling and steering group of the articulated quadrilateral type arranged transversally with respect to the direction of movement of the vehicle.

However, such an arrangement requires that the front track of the vehicle, in other words the distance between the two front wheels, although smaller than conventional four-wheeled vehicles, is of a substantial size, the transversal rolling and steering group with articulated quadrilateral having sufficiently long arms as to allow the maximum desired excursion of the front wheels indeed having to be arranged between the two front wheels.

The purpose of the present invention is therefore to make a rolling vehicle with two front steering wheels and at least a rear driving wheel that, as well as allowing the advantages typical of automobiles and of motorcycles in terms of stability and handling respectively to be combined, also allows a very narrow track and, consequently, a low overall width, thus falling within the particular category of vehicles, in particular motorcycles, for which the aerodynamic impact counts a great deal in order to reach high speeds.

Another purpose of the present invention is to make a rolling vehicle in which it is possible to adjust the height and inclination of the steering controls with respect to the position of the rider, in a way totally similar to what occurs in the field of automobiles.

Yet another purpose of the present invention is to make a compact rolling vehicle able to be equipped with particularly slim integral fairings, like those of common high-performance sporting motorcycles.

A further purpose of the present invention is finally to make a rolling vehicle that is simple and cost-effective to produce.

These purposes are accomplished according to the present invention by making a rolling vehicle with two front steering wheels and at least a rear driving wheel as outlined in claim 1.

Further characteristics and advantages of the present invention emerge from the subsequent dependent claims.

The characteristics and advantages of a rolling vehicle with two front steering wheels and at least a rear driving wheel according to the present invention shall become clearer from the following description, given as a non-limiting example, referring to the attached schematic drawings in which:
Figure 1 is a front perspective view of an example embodiment of a three-wheeled rolling vehicle with two front steering wheels and a rear driving wheel according to the present invention, illustrated in static conditions;
Figure 2a is a front perspective view of the components of the front-wheel assembly of the vehicle of figure 1;
Figure 2b is a front perspective view of the components of the front-wheel assembly of the vehicle of figure 1 that define the steering and rolling kinematics thereof;
Figure 3 is a top side view of the vehicle of figure 1;
Figure 4 is a side view of the kinematic scheme of the vehicle of figure 1;
Figure 5 is a top front view of the vehicle of figure 1;
Figure 6 is a front view of the kinematic scheme of the vehicle of figure 1;
Figures 7A, 7B and 7C schematically show three different example embodiments of the front suspension system of a three-wheeled rolling vehicle according to the present invention; and
Figures 8A, 8B and 8C schematically show three different example embodiments of the steering kinematics of a three-wheeled rolling vehicle according to the present invention.

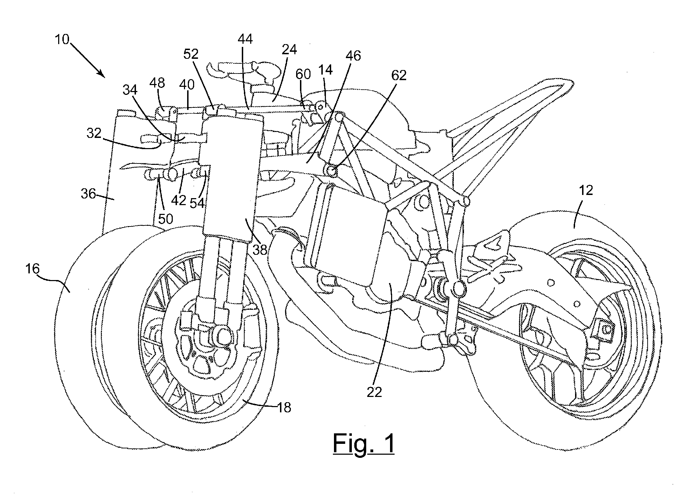

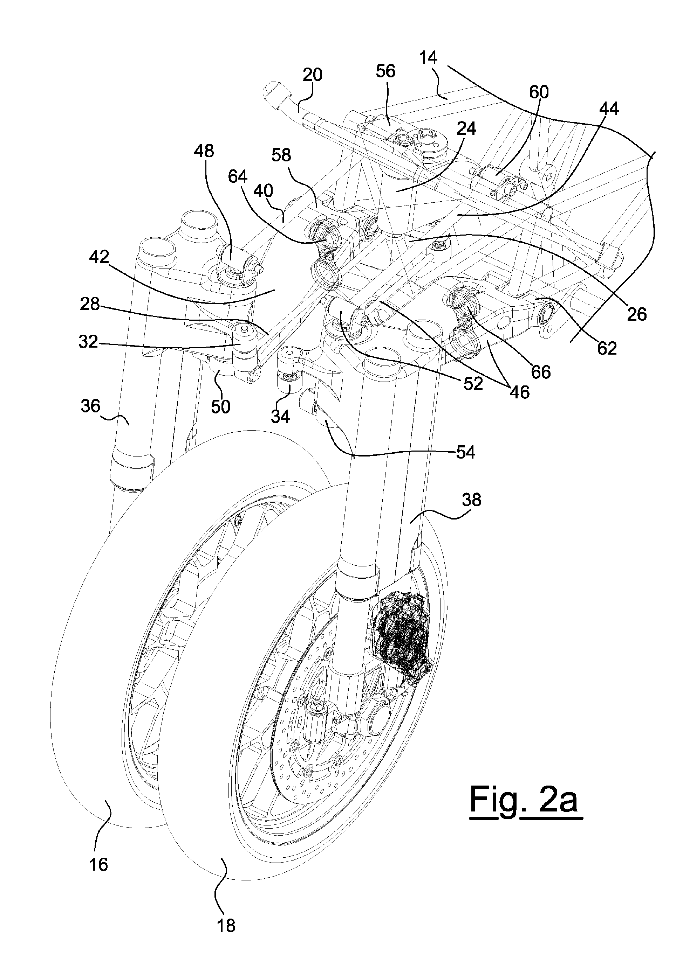

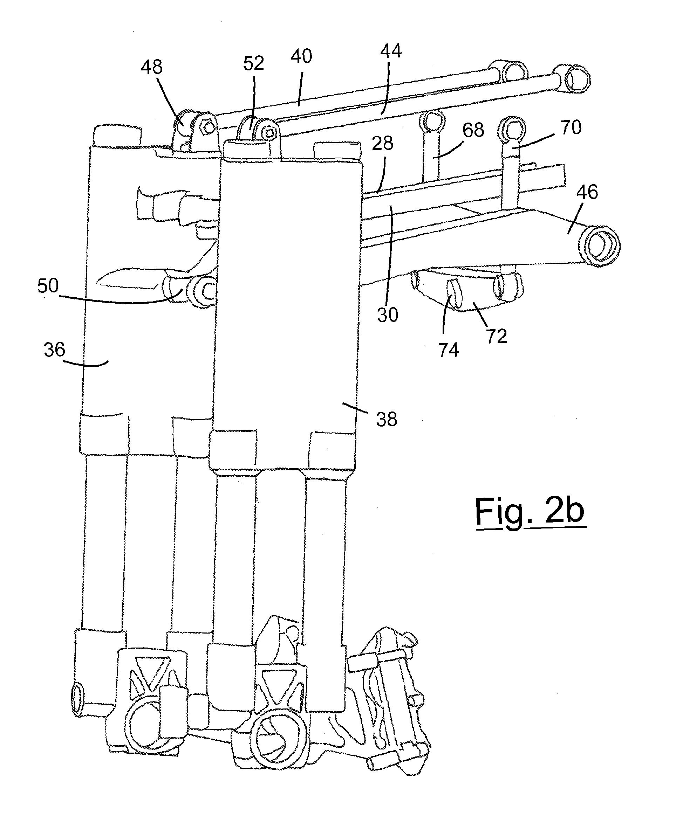

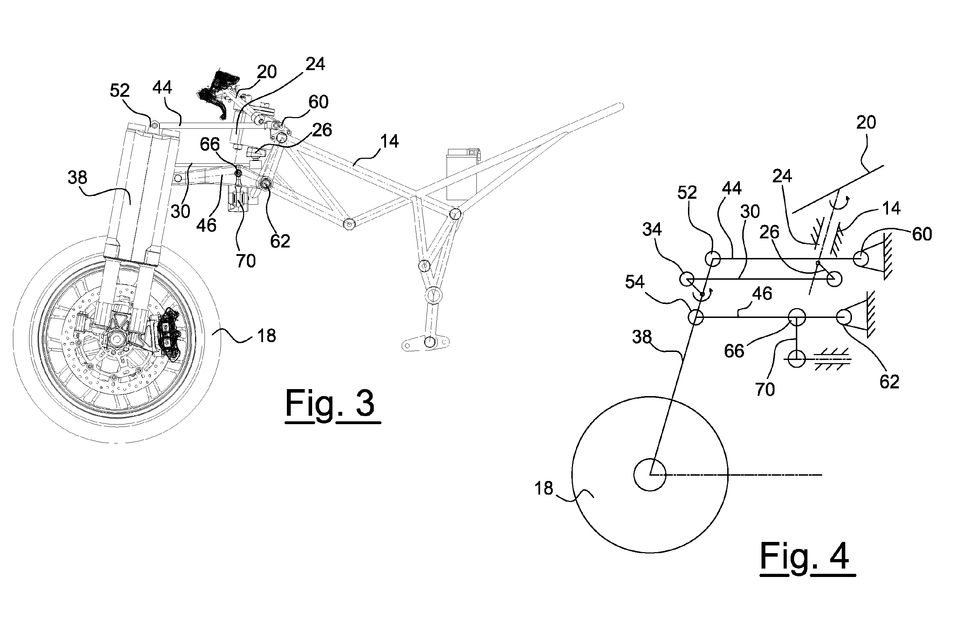

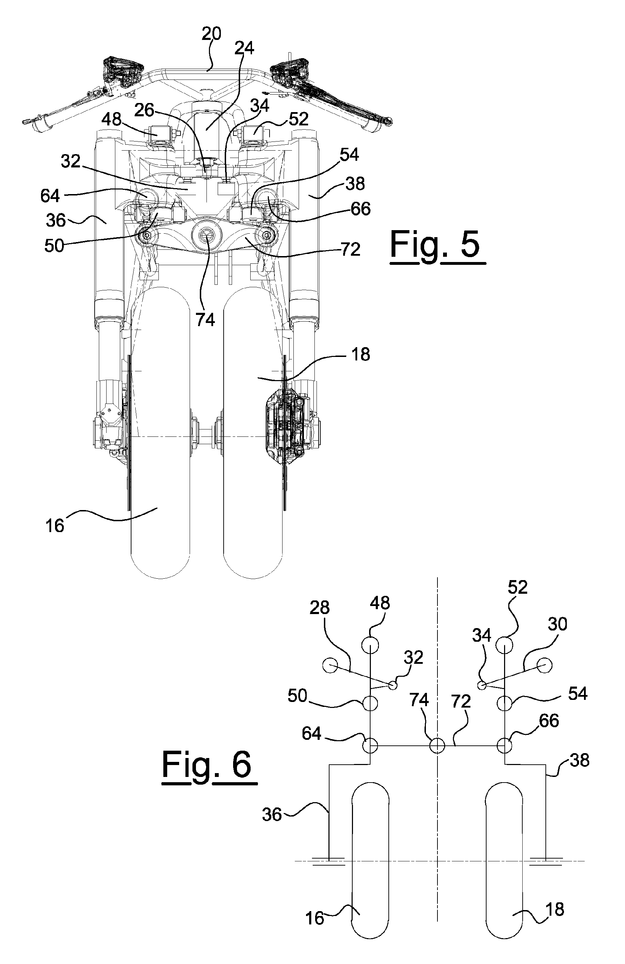

With reference in particular to figures 1 to 7, an example embodiment of a rolling vehicle with two front steering wheels according to the invention is shown, which is wholly indicated with reference numeral 10.

It should be specified that, in the figures and in the following description, some components of vehicles in general and of motorcycles in particular are not illustrated or in any case are not detailed, since they belong to the state of the art and are not necessary for the purposes of understanding the present invention.

It should be furthermore specified that, although in the figures and in the following description a vehicle provided with a single rear driving wheel is disclosed, the invention can be also directed to four-wheeled vehicles derived from motorcycles.

In particular, concerning the kinematics to be used with the rear axle for obtaining a four-wheeled vehicle of rolling type, reference is made to the European patent No. 1 694 555, of the same Applicant, referred only to what described about the rear suspension.

The vehicle 10 essentially comprises at least a rear driving wheel 12 with fixed axis connected to a motor 22, a frame 14 and a pair of front steering wheels 16 and 18. Moreover, in general there are handlebars 20 or another steering member through which it is possible to act upon the front steering wheels 16 and 18.

From this first general arrangement it is clear that some elements, like for example the rear suspension, the motor 22 and many other components, can be taken from any mass-produced vehicle, just like the system for transmitting motion to the rear wheel or wheels (using a chain, Cardan shaft or other). In the same way, complete groups taken from current vehicles could be used, provided that it is in the new and original arrangement of the invention, for the arm or arms of the front suspensions, as shall be described in greater detail hereafter, for the front wheels 16 and 18 and for the braking system.

It should be noted that the handlebars 20 are connected to the frame 14 by means of a cylindrical hinge 24 that corresponds to the axis of the steering gear. A substantially horizontal steering control lever 26 is fixedly connected to the hinge 24, and thus able to rotate together with the axis of the steering gear, and is arranged perpendicular to the longitudinal axis of the vehicle 10 when the front wheels 16 and 18 are not steered. More specifically, the hinge 24 is fixedly connected to the steering control lever 26 in the barycentre thereof.

The ends of two shafts 28 and 30 that are substantially parallel to one another arranged along the direction of movement of the vehicle 10 are also hinged at the ends of the steering control lever 26. The other ends of the shafts 28 and 30 are connected , by means of respective ball joints 32 and 34, to arms or pairs of arms 36 and 38 that transmit the steering movement directly to the two front wheels 16 and 18, said arms 36 and 38 being able to be equipped or not with independent suspensions, as shall be specified more clearly hereafter.

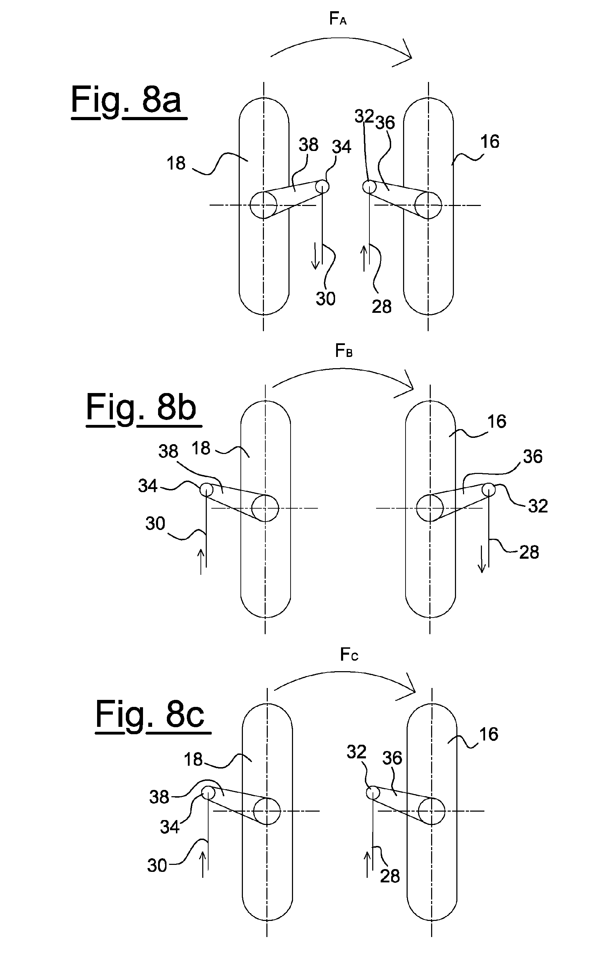

Each of the shafts 28, 30 acts alternately as tie rod or as compression member according to whether the handlebars 20 steer to the left or to the right and according to its own displacement (described later on) with respect to the front wheels 16 and 18, as can be seen in the schematic plan views of figures 8A-8C.

Each of the front arms or pairs of arms 36 and 38, at the bottom ends of which the two front wheels 16 and 18 and possibly the discs or drums of the brake unit are fixedly connected so that they can rotate, in a *per se* known way, is also anchored to the frame by means of a top cross member 42, 46. In practice, each front wheel 16, 18 is connected to the frame 14 by means of an articulated quadrilateral arranged longitudinally, in other words parallel to the direction of movement of the vehicle 10.

More specifically, the articulated quadrilateral arranged on the right hand side of the vehicle 10 is formed, for the two long sides, from the top right and bottom right cross members 40, 42 and, for the two short sides, from the top portion of the front right arm 36 and from a suitable portion of the frame 14. Similarly, the articulated quadrilateral arranged on the left hand side of the vehicle 10 is formed, for the two long sides, from the top left and bottom left cross members 44, 46 and, for the two short sides, from the top portion of the front left arm 38 and, again, from a portion of the frame 14.

In a preferred embodiment of the present invention, all of the cross members 40, 42, 44 and 46 are approximately the same length, so that the two longitudinal articulated quadrilaterals formed from them operate more precisely as articulated parallelograms.

The arms 36 and 38 are connected to the respective longitudinal cross members 40, 42 and 44, 46 by means of ball joints 48, 50 and 52, 54, whereas the same longitudinal cross members 40, 42 and 44, 46 are connected to the frame 14 by means of cylindrical hinges 56, 58 and 60, 62.

The two articulated quadrilaterals, right and left, are thus connected, through respective spherical hinges 64 and 66, to two substantially vertical right and left arms 68, 70, and are then interconnected through a central rocker arm 72. Such a central rocker arm 72 is arranged transversally with respect to the vehicle 10 and is fixed to the frame 14 by means of a cylindrical hinge 74 arranged at the middle of the vehicle 10 itself. The two distinct articulated parallelograms therefore make up the rolling kinematics that, when the vehicle 10 leans during travel, allows both of the front wheels 16 and 18 to be kept in contact with the road surface by rotating about the hinge 74 of the rocker arm 72.

With reference to the shape of the arms and of the pairs of front arms 36 and 38 it should be specified that there are numerous possible embodiments known in the field of two-wheeled vehicles that can be adopted. In detail, it is possible to have a kinematic scheme with a conventional front-wheel assembly, in which the front arm 36 connected to the wheel 16 splits on both sides of said wheel 16 to form a classic fork, whereas as shown in figures 8A-8C it is advantageously possible to use an equally classic front-wheel assembly of the single-arm type, with wheel mounted canti-levered, in which both of the stems of the suspension are on a single side of the wheel 16.

With this single-arm solution for a wheel various possibilities of embodiment are foreseen.

Indeed, with single-arm technology for a single wheel, the steering moment given by the handlebars 20 can be transmitted to each individual front wheel 16 and 18 in three different ways, as can be seen in the schematic views of figures 8A-8C.

In figure 8A both of the shafts 28 and 30 that control steering are positioned inside the two front wheels 16 and 18 and therefore, for example for steering to the right (in the direction of the arrow F_{A}), the shaft 30 acts like a tie rod for the arm 38, whereas the shaft 28 is the compression member for the opposite arm 36. The tie rod/compression member system inverts in the configuration shown in figure 8B, where both of the shafts 28 and 30 are positioned outside of the two front wheels 16 and 18. In this case, the shaft 30 acts like a compression member and the shaft 28 like a tie rod, again in the hypothetical case of steering to the right, as shown by the arrow F_{B}.

Figure 8C schematically shows a case in which both of the shafts 28 and 30 are positioned on the same side (in the example the left) of the front wheels 16 and 18 with respect to the longitudinal axis of the vehicle 10. In this case, both of the shafts 28 and 30 behave like a compression member when the vehicle 10 steers towards the right (direction of the arrow F_{c}).

It is clear that, in the case of steering to the left, the shaft that in the previous situation behaved like a tie rod acts as a compression member, whereas the one that behaved like a compression member acts as a tie rod.

In the same way, different solutions are also possible as far as the front suspension system of the vehicle 10 is concerned, without for this reason departing from the scope of protection foreseen for the present invention.

Figures 7A to 7C illustrate three possible example embodiments of such a suspension system, which foresee the usual combined presence of at least one elastic component, like for example a coil spring , and of at least one damping component, like for example a telescopic hydraulic shock absorber.

Figure 7A illustrates a solution in which each front arm 36, 38 has an independent suspension 76 of the type known for two-wheeled vehicles directly applied to it, consisting in particular of an elastic component and a damping component both fixedly connected to the respective front arm 36, 38.

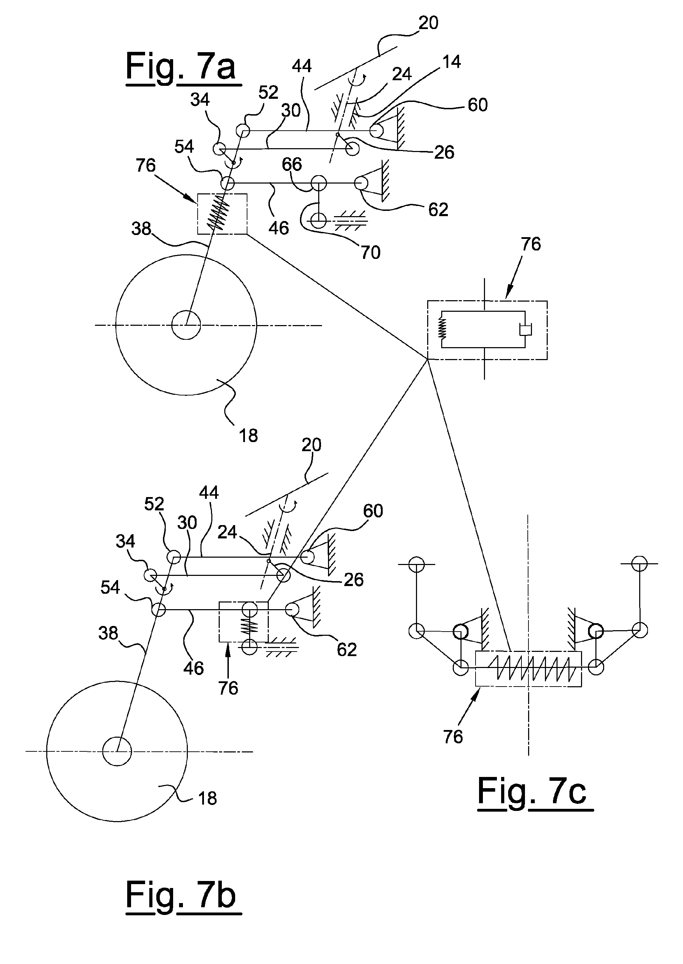

Figure 7B, on the other hand, illustrates a solution in which the arms 68 and 70 fixedly connected to the respective articulated parallelograms are replaced by known conventional shock absorbers for two-wheeled vehicles.

Finally, in the solution shown in figure 7C a single shock absorber is foreseen inserted in the middle of a double rocker arm.

In turn, the arms 68 and 70 and the rocker arm 72 can also be connected to the two articulated parallelograms in any way and with any inclination, not in any way compromising the operating principles of the rolling vehicle 10 according to the present invention.

The operation of the rolling vehicle 10 according to the present invention can be immediately understood from the above description and from the figures that schematise it and illustrate it in various positions. It can thus be understood that such a rolling vehicle with two front steering wheels and at least a rear driving wheel according to the present invention achieves the purposes outlined previously, not only allowing the stability of an automobile to be combined with the handling of a motorcycle, but also allowing a front-wheel assembly to be obtained with wheels almost twinned and capable of remaining perfectly parallel to each other and equally spaced apart in any condition of use of the vehicle.

The steering kinematics orientated longitudinally, applied for example to a three-wheeled rolling vehicle with two front steering wheels, indeed allows a vehicle to be built with a very narrow track and it is thus ideal for vehicles in which the aerodynamic impact counts a great deal in order to reach very high speeds. Moreover, the two articulated parallelograms, due to the way in which they are mounted on the frame of the vehicle and their interconnection system, keep the relative distance between them constant, with consequent advantages both in terms of appearance and in terms of simplicity of construction.

With this type of scheme the handlebars are completely freed from the steering tie rods. In this way, handlebars that can be adjusted in height and inclination similar to the solution (steering wheel and adjustable steering column) applied in the field of automobiles can be made.

The rolling vehicle with two front steering wheels and at least a rear driving wheel of the present invention thus conceived can in any case undergo numerous modifications and variants, all of which are covered by the same inventive concept.

Moreover, in practice the materials used, as well as their sizes and the components, can be whatever according to the technical requirements.

## Claims

1. Rolling vehicle (10) with two front steering wheels (16, 18) comprising a frame (14), handlebars (20), at least a rear driving wheel (12) connected to a motor (22), and a steering kinematism of said two front wheels (16, 18), **characterised in that** said steering kinematism is longitudinal and comprises two parallel longitudinal arms (36, 38) fixedly connected at one end of a steering control lever (26), connected to said handlebars (20) through a cylindrical hinge (24), and at the other end, through two spherical hinges (32, 34), to two articulated quadrilaterals, also longitudinal with respect to said vehicle (10), which rotatably connect said two front wheels (16, 18) to said frame (14), so as to achieve steering, performed by a user through a rotation of said handlebars (20), of said two front wheels (16, 18) with respect to said frame (14).

2. Rolling vehicle (10) according to claim 1, **characterised in that** said two quadrilaterals comprise two top cross members (44, 40), two bottom cross members (46, 42), and two front connection arms (38, 36) with said two front wheels (16, 18), in which said top cross members (44, 40) are connected, on one side, through cylindrical hinges (56, 60), to said frame (14), and on the other side, through ball joints (48, 52) to said front arms (38, 36), and in which said bottom cross members (46, 42) are connected, on one side, through cylindrical hinges (58, 62), to said frame (14), and on the other side, through ball joints (40, 54) to said front arms (38, 36).

3. Rolling vehicle (10) according to claim 2, **characterised in that** said two arms (36, 38) are connected to said two front arms (38, 36) of said quadrilaterals through said two spherical hinges (32, 34).

4. Rolling vehicle (10) according to claim 3, **characterised in that** said two parallel articulated quadrilaterals are connected together in a perpendicular direction by a rocker arm (72) through two spherical hinges (66, 64).

5. Rolling vehicle (10) according to claim 4, **characterised in that** said rocker arm comprises two arms (68, 70) that connect it to said bottom cross members (46, 42) of said quadrilaterals through said two spherical hinges (66, 64).

6. Rolling vehicle (10) according to claim 5, **characterised in that** said rocker arm (72) is connected to the frame by a hinge (74) arranged substantially in a position of symmetry of said rolling vehicle (10) so as to allow rolling rotations of said two articulated quadrilaterals with respect to said frame (14) about said hinge (74).

7. Rolling vehicle (10) according to claim 6, **characterised in that** said front arms (36, 38) respectively connected to said front wheels (16, 18) split on both sides of said front wheels (16, 18) to form a classic fork.

8. Rolling vehicle (10) according to claim 6, **characterised in that** said front arms (36, 38) are respectively connected to said front wheels (16, 18) with a single arm on a single side of said front wheels (16, 18).

9. Rolling vehicle (10) according to claim 8, **characterised in that** both of said front arms (36, 38) are respectively connected to said front wheels (16, 18) with a single arm just on the outer side of said front wheels (16, 18).

10. Rolling vehicle (10) according to claim 8, **characterised in that** both of said front arms (36, 38) are respectively connected to said front wheels (16, 18) with a single arm just on the inner side of said front wheels (16, 18).

11. Rolling vehicle (10) according to claim 8, **characterised in that** both of said front arms (36, 38) are respectively connected to said front wheels (16, 18) with a single arm just on the right side of said front wheels (16, 18).

12. Rolling vehicle (10) according to claim 8, **characterised in that** both of said front arms (36, 38) are respectively connected to said front wheels (16, 18) with a single arm just on the left side of said front wheels (16, 18).

13. Rolling vehicle (10) according to claim 8, **characterised in that** each of said front arms (36, 38) is applied directly to an independent suspension (76) consisting of an elastic component and a damping component both fixedly connected to said respective front arm (36, 38).

14. Rolling vehicle (10) according to claim 8, **characterised in that** said arms (68, 70) that connect said rocker arm (72) to said bottom cross members (46, 42) of said quadrilaterals are replaced by two shock absorbers.

15. Rolling vehicle (10) according to claim 8, **characterised in that** it comprises a shock absorber inserted in said rocker arm (72).
